# EUROPÄISCHE PATENTANMELDUNG

(11) **EP 1 164 037 A2**
(43) Veröffentlichungstag der Anmeldung: **19.12.2001**
(21) Anmeldenummer: 01114300.5
(22) Anmeldetag: 13.06.2001
(51) Int. Cl.: B60J 3/02

(54) **Sonnenblende für Fahrzeuge, vorzugsweise für Kraftfahrzeuge**

(30) Priorität: 17.06.2000 DE 10029906
(71) Anmelder: REITTER & SCHEFENACKER GmbH & Co. KG, D-73730 Esslingen (DE)
(72) Erfinder: Quapil, Olaf, 71522 Backnang (DE)
(74) Vertreter: Kohl, Karl-Heinz

(57) **Zusammenfassung**

Die Sonnenblende (1, 4) ist für Kraftfahrzeuge vorgesehen und im Bereich oberhalb der Windschutzscheibe angeordnet. Die Sonnenblende (1, 4) ist aus einer Ruhelage in eine Gebrauchslage verstellbar und an einem fahrzeugseitigen Träger (18) gehalten. Um den Fahrer und/oder den Beifahrer optimal vor Sonneneinstrahlung zu schützen, ist an der Sonnenblende (4) wenigstens ein Blendenteil (5) vorgesehen, das aus einer Ruhelage in eine Gebrauchslage verstellbar ist. Das Blendenteil (5) bietet einen zusätzlichen Blendschutz für den Fahrer und/oder den Beifahrer in der Gebrauchslage. Das Blendenteil kann ebenso wie die Sonnenblende (1, 4) selbst aus einer Ruhelage in eine Gebrauchslage und umgekehrt verstellt werden.

## Beschreibung

Die Erfindung betrifft eine Sonnenblende für Fahrzeuge, vorzugsweise für Kraftfahrzeuge, nach dem Oberbegriff des Anspruches 1.

In Kraftfahrzeugen sind im Bereich oberhalb der Windschutzscheibe in der Regel zwei Sonnenblenden für den Fahrer und den Beifahrer schwenkbar gelagert. Werden der Fahrer und/oder der Beifahrer durch die Sonne geblendet, werden die Sonnenblenden aus der Ruhelage nach unten in die Gebrauchslage heruntergeklappt. Je nach Stand der Sonne reicht häufig die Blendwirkung der Sonnenblende nicht aus.

Der Erfindung liegt die Aufgabe zugrunde, die gattungsgemäße Sonnenblende so auszubilden, daß der Fahrer und/oder der Beifahrer optimal vor Sonneneinstrahlung geschützt ist.

Diese Aufgabe wird bei der gattungsgemäßen Sonnenblende erfindungsgemäß mit den kennzeichnenden Merkmalen des Anspruches 1 gelöst.

Bei der erfindungsgemäßen Sonnenblende ist das Blendenteil vorgesehen, das einen zusätzlichen Blendschutz für den Fahrer und/oder den Beifahrer in der Gebrauchslage bietet. Das Blendenteil kann ebenso wie die Sonnenblende selbst aus einer Ruhelage in eine Gebrauchslage und umgekehrt verstellt werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: in schematischer Darstellung und in Ansicht eine erfindungsgemäße Sonnenblende, deren Blendenteil die Gebrauchslage einnimmt,
- Fig. 2: in einer Darstellung entsprechend Fig. 1 die Sonnenblende, deren Blendenteil eine Zwischenstellung einnimmt,
- Fig. 3: die Sonnenblende gemäß Fig. 1, deren Blendenteil die Ruhelage einnimmt,
- Fig. 4: einen Querschnitt durch die erfindungsgemäße Sonnenblende,
- Fig. 5: in einer Darstellung entsprechend Fig. 1 eine zweite Ausführungsform einer erfindungsgemäßen Sonnenblende, deren Blendenteil die Gebrauchslage einnimmt,
- Fig. 6: die Sonnenblende gemäß Fig. 5, deren Blendenteil eine Zwischenstellung beim Einfahren in die Ruhelage einnimmt,
- Fig. 7: die Sonnenblende gemäß Fig. 5, die eine Ruhelage einnimmt,
- Fig. 8: die Sonnenblende gemäß Fig. 5, deren Blendenteil eine Zwischenstellung beim Verstellen aus der Ruhe- in die Gebrauchslage einnimmt,
- Fig. 9: das Blendenteil in einer weiteren Zwischenstellung kurz vor Erreichen der Gebrauchslage,
- Fig. 10: einen Schnitt längs der Linie X-X in Fig. 5.

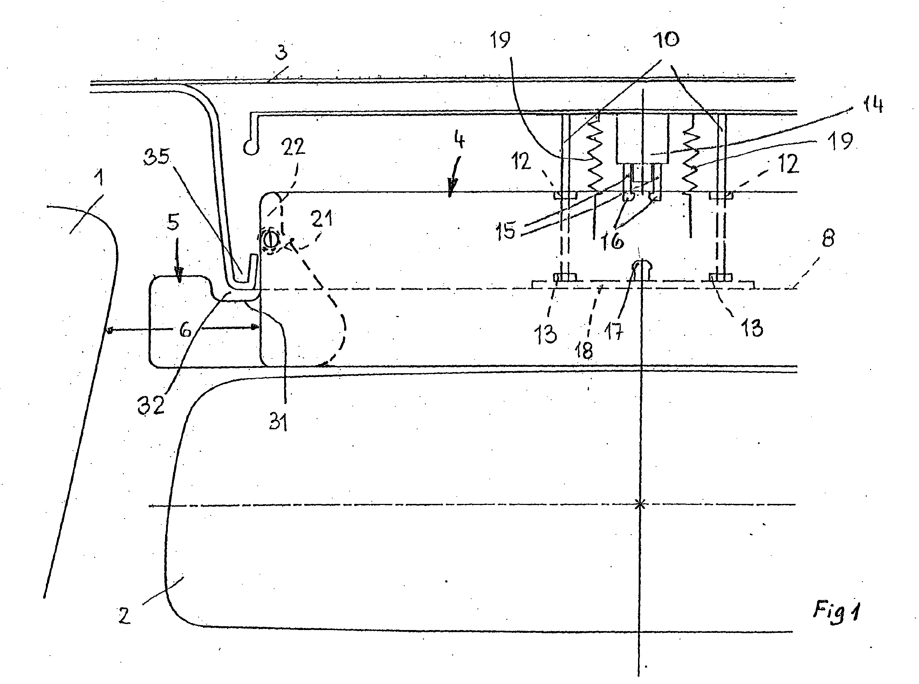

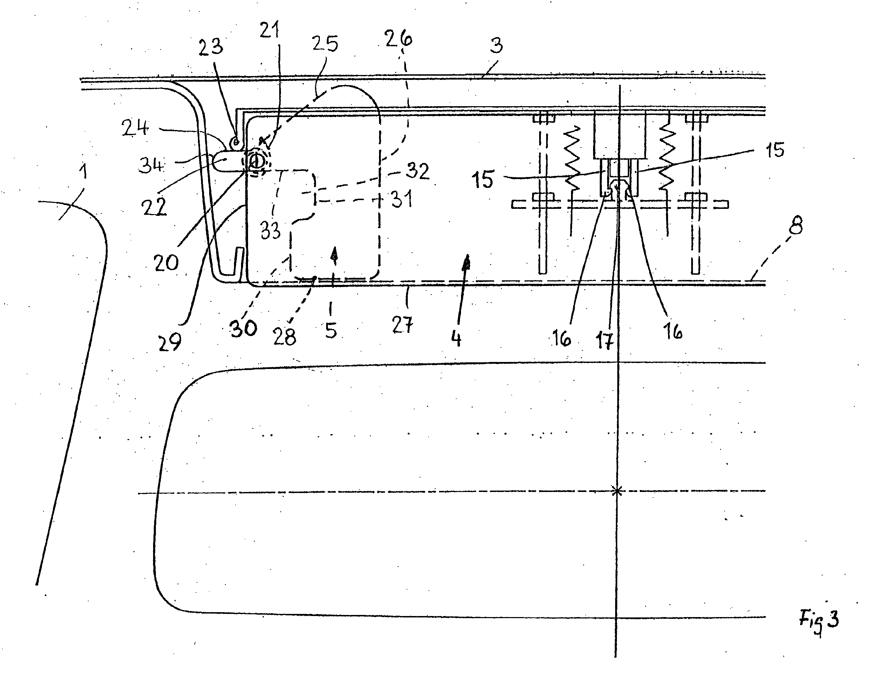

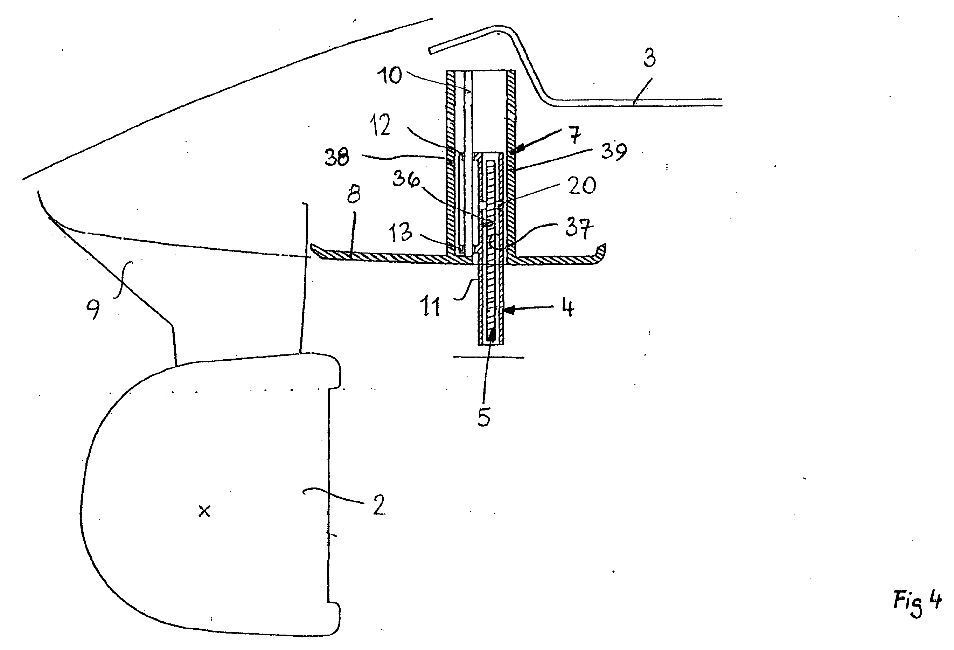

In Kraftfahrzeugen sind auf der Fahrer- und auf der Beifahrerseite Sonnenblenden vorgesehen, die aus einer Ruhelage nach unten in eine Gebrauchslage geschwenkt werden können. Fig. 1 zeigt einen Teil der fahrerseitigen Sonnenblende 1, die in bekannter Weise ausgebildet ist. Sie liegt mit Abstand neben einem Innenrückblickspiegel 2, der in bekannter Weise im Fahrzeug befestigt ist. Im Bereich zwischen dem Innenrückblickspiegel 2 und dem Dach 3 des Fahrzeuges befindet sich eine weitere Sonnenblende 4, die aus einer in Fig. 3 dargestellten Ruhelage nach unten in eine in Fig. 1 dargestellte Gebrauchslage verschoben werden kann. Die Sonnenblende 4 hat rechteckigen Umriß. Wie Fig. 4 zeigt, ist die Sonnenblende 4 als Hohlkörper ausgebildet, in dem endseitig ein Blendenteil 5 untergebracht ist, das aus einer Ruhelage (Fig. 3) in eine Gebrauchslage (Fig. 1) verstellt werden kann. Mit dem Blendenteil 5 kann der Bereich 6 zwischen der in Gebrauchslage befindlichen Sonnenblende 4 und der in Gebrauchslage verstellten Sonnenblende 1 zumindest teilweise geschlossen werden.

Auch am beifahrerseitigen Ende der Sonnenblende 4 kann ein derartiges Blendenteil 5 vorgesehen sein, um den Bereich zwischen der in Gebrauchslage befindlichen Sonnenblende 4 und der die Gebrauchslage einnehmenden beifahrerseitigen Sonnenblende wenigstens teilweise zu schließen.

Der Innenquerschnitt der Sonnenblende 4 ist nur so groß, daß das flügelartige Blendenteil 5 einwandfrei aus der Ruhelage in die Gebrauchslage verstellt werden kann. Die Sonnenblende 4 selbst wird in Höhenrichtung aus der Gebrauchslage in die Ruhelage und umgekehrt verstellt. In der Ruhelage ist die Sonnenblende 4 zusammen mit dem Blendenteil 5 in einer Aufnahme 7 untergebracht (Fig. 4) die innerhalb eines Fahrzeughimmels 8 verdeckt untergebracht ist. Der Fahrzeughimmel 8 umgibt im dargestellten Ausführungsbeispiel den Spiegelfuß 9 (Fig. 4), der am Fahrzeugdach 3 in bekannter Weise befestigt ist. In der Aufnahme 7 sind zwei zueinander parallele und mit Abstand voneinander liegende Führungen 10 vorgesehen, die sich vertikal erstrecken und vorteilhaft stabförmig ausgebildet sind. Die Sonnenblende 4 weist auf ihrer der Windschutzscheibe zugewandten Rückseite 11 mit Abstand übereinander liegende Augen 12, 13 auf, mit denen die Sonnenblende 4 auf den Führungen 10 geführt ist.

Im Bereich zwischen den symmetrisch zur Quermittelebene der Sonnenblende 4 liegenden Führungen 10 ist kraftfahrzeugseitig ein Ein-und Ausraster 14 (push-push-Element) vorgesehen, der zwei Schnappzungen 15 aufweist, die parallel zueinander liegen und nach unten gerichtet sind. Die freien Enden 16 der Schnappzungen 15 sind in Richtung zueinander verbreitert und bilden Rastnasen, die mit einem sonnenblendenseitigen Gegenelement 17 zusammenwirken können. Es ist pilzförmig ausgebildet und steht von einem Träger 18 ab, der an den unteren Augen 13 der Sonnenblende 4 vorgesehen ist.

Die Sonnenblende 4 ist in Richtung auf ihre Gebrauchslage durch wenigstens eine Druckfeder 19 belastet. Im dargestellten Ausführungsbeispiel sind zwei Druckfedern vorgesehen, die im Bereich zwischen den Führungen 10 und dem Ein/Ausraster 14 angeordnet sind und deren eines Ende an der Aufnahme 7 und deren anderes Ende an der Sonnenblende 4 befestigt ist.

In der Ruhelage (Fig. 3) ist die Sonnenblende 4 so weit nach oben geschoben, daß sie innerhalb der Aufnahme 7 liegt und nicht oder nur unwesentlich nach unten über den Fahrzeughimmel 8 ragt. Die freien Enden 16 der Schnappzungen 15 hintergreifen das pilzförmige Gegenelement 17 der Sonnenblende 4, so daß diese in der Ruhelage einwandfrei verrastet ist. Das Blendenteil 5 nimmt ebenfalls seine Ruhelage ein, in der es vollständig innerhalb der Sonnenblende 4 und damit innerhalb der Aufnahme 7 liegt. Das Blendenteil 5 ist um eine Achse 20 schwenkbar, die nahe dem der fahrerseitigen Sonnenblende 1 zugewandten Rand der Sonnenblende 4 vorgesehen ist. Auf der Achse 20 sitzt eine Drehfeder 21, die das Blendenteil 5 in Richtung auf seine Gebrauchslage belastet. Unter der Kraft der Drehfeder 21 liegt das Blendenteil 5 mit einer vorstehenden Zunge 22 an einem Anschlag 23 an, der vorteilhaft an der Aufnahme 7 vorgesehen ist, jedoch auch am Fahrzeugdach 3 vorgesehen sein kann. Die Zunge 22 liegt mit einer vorteilhaft ebenen Außenseite 24 am Anschlag 23 an. In der Ruhelage gemäß Fig. 3 liegt die Außenseite 24 horizontal. Sie geht gekrümmt in eine stumpfwinklig zu ihr liegende und in Richtung auf das Fahrzeugdach sich erstreckende gerade Außenseite 25 über. An sie schließt bogenförmig gekrümmt ein gerader Rand 26 an, der in der Ruhelage vertikal verläuft und sich bis nahe an den unteren Rand 27 der Sonnenblende 4 erstreckt. Der Rand 26 geht gekrümmt in einen rechtwinklig zu ihm liegenden und in Richtung auf die fahrerseitige Sonnenblende 1 sich erstreckenden geraden Rand 28 über. Mit Abstand von der Schmalseite 29 geht der Rand 28 gekrümmt in einen aufwärts gerichteten und parallel zum Rand 26 verlaufenden geraden Rand 30 über, der wesentlich kürzer ist als der Rand 26. Der Rand 30 geht gekrümmt in einen Boden 31 einer Vertiefung 32 über. Der Boden 31, der sich parallel zu den Rändern 26, 30 erstreckt, geht bogenförmig gekrümmt in einen geraden Rand 33 über, der sich parallel zur Außenseite 24 der Zunge 22 erstreckt und der über eine halbkreisförmig gekrümmt verlaufende Stirnseite 34 der Zunge 22 in deren Außenseite 24 übergeht.

In der in Fig. 3 dargestellten Ruhelage ragt das Blendenteil 5 mit der Zunge 22 über die Stirnseite 29 der Sonnenblende 4. Auch der Anschlag 23 befindet sich außerhalb der Sonnenblende 4.

Um die Sonnenblende 4 in die Gebrauchslage zu verstellen, wird sie zunächst in Richtung auf den Ein/Ausraster 14 von Hand belastet, wodurch in bekannter Weise die Schnappzungen 15 das Gegenelement 17 der Sonnenblende 4 freigeben. Sie wird dann unter der Kraft der Druckfedern 19 nach unten aus der Aufnahme 7 geschoben.

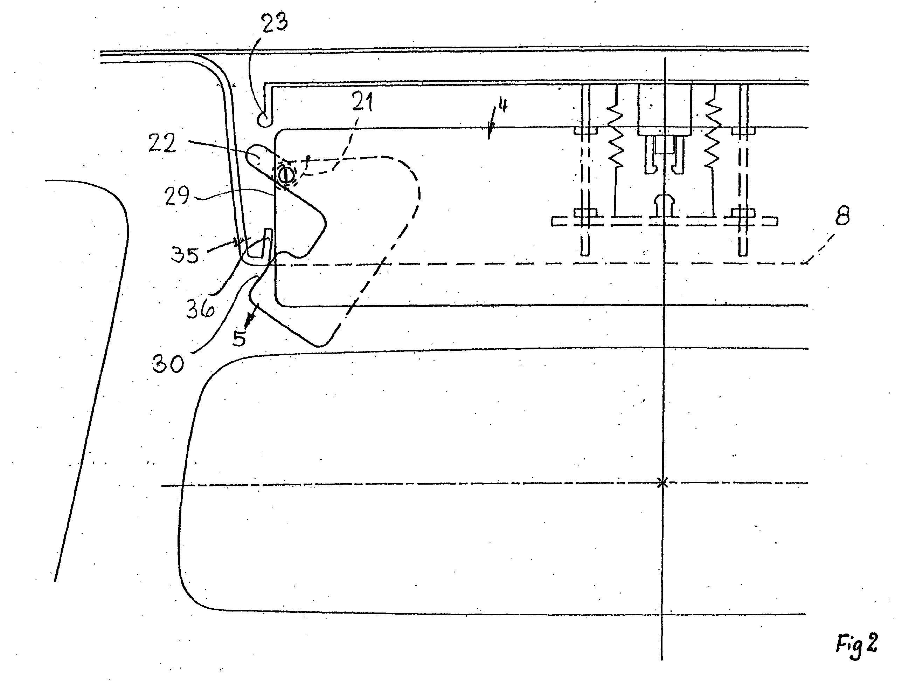

Fig. 2 zeigt eine Mittelstellung der Blende 4, die teilweise nach unten aus der Aufnahme 7 geschoben ist. Beim Verschieben der Blende 4 wird auch das Blendenteil 5 mitgenommen, das sich unter der Kraft der Drehfeder 21 zunächst am Anschlag 23 abstützt. Ihm liegt mit Abstand ein im Querschnitt U-förmiger Führungsteil 35 gegenüber, dessen freier Schenkel 36 aufwärts in Richtung auf den Anschlag 23 gerichtet ist. Er hat geringen Abstand von der Schmalseite 29 der Blende 4, so daß diese beim Verschieben nicht mit dem Schenkel 36 in Berührung kommt. Der Abstand des Schenkels 36 vom Anschlag 23 ist so gewählt, daß das Blendenteil 5, sobald die Zunge 22 vom Anschlag 23 freikommt, mit seinem Rand 30 am Führungsteil 35 zur Anlage kommt (Fig. 2). Das Blendenteil 5 liegt mit dem Rand 30 unter der Kraft der Drehfeder 21 am Führungsteil 35 an. Beim weiteren Herausschieben der Blende 4 wird das Blendenteil 5 längs des Führungsteils 35 weiter verschoben und durch die Drehfeder 21 geschwenkt, bis der Führungsteil 35 in die Vertiefung 32 des Blendenteils 5 gelangt (Fig. 1). In dieser Stellung ist das Blendenteil 5 im Vergleich zur Ruhelage gemäß Fig. 3 um 90° um die Achse 20 geschwenkt. Die in Fig. 1 dargestellte Gebrauchslage des Blendenteils 5 wird durch einen (nicht dargestellten) Anschlag bestimmt, der an der Blende 4 vorgesehen ist. Das Blendenteil 5 ragt in Richtung auf die fahrerseitige Sonnenblende 1 und verschließt dadurch den Bereich 6 zwischen der mittleren Sonnenblende 4 und der fahrerseitigen Sonnenblende 1.

Der Führungsteil 35 ist vorteilhaft Bestandteil des Fahrzeughimmels 8, über den die mittlere Blende 4 bis nahe an den Innenrückblickspiegel 2 reicht, in Fahrtrichtung gesehen.

Das Blendenteil 5 gelangt in der beschriebenen Weise selbsttätig in seine Abblendstellung, wenn die Sonnenblende 4 aus der Aufnahme 7 nach unten ausgefahren wird. Wie Fig. 4 zeigt, hat das Blendenteil 5 von den zueinander parallelen Innenseiten 36, 37 der Seitenwände 38, 39 der Aufnahme 7 Abstand, so daß das Blendenteil 5 zuverlässig geschwenkt werden kann. Die untere Gebrauchslage der Sonnenblende 4 wird durch die unteren Augen 13 bestimmt, die in der ausgefahrenen Lage an der Innenseite des Fahrerhimmels 8 innerhalb der Aufnahme 7 zur Anlage kommen.

Die Sonnenblende 4 kann gegen die Kraft der Druckfedern 19 in die Aufnahme 7 verschoben werden, bis das Gegenelement 17 in die Schnappzungen 15 des Ein/Ausrasters 14 einrastet (Fig. 3). Beim Zurückschieben der Sonnenblende 4 gelangt zunächst der Boden 31 der Vertiefung 32 des Blendenteiles 5 zur Anlage am Führungsteil 35. Dann wird das Blendenteil 5 infolge seiner Anlage am Führungsteil 35 beim Zurückschieben des Blendenteiles 4 gegen die Kraft der Drehfeder 21 im Gegenuhrzeigersinn geschwenkt. Dabei gleitet das Blendenteil 5 relativ zum Führungsteil 35, wodurch es zwangweise um die Achse 20 geschwenkt wird. Die Zunge 22, die in der Gebrauchslage des Blendenteiles 5 (Fig. 1) vollständig in der Sonnenblende 4 liegt, gelangt wiederum in den Bereich zwischen den Anschlag 23 und dem Führungsteil 35 (Fig. 2). Hierbei wird das Blendenteil 5 über seinen Rand 30 am Führungsteil 35 unter der Kraft der Drehfeder 21 abgestützt. Beim weiteren Hochschieben der Sonnenblende 4 wird das Blendenteil 5 schließlich in die in Fig. 3 dargestellte Ruhestellung verschwenkt, in der es mit der Zunge 22 am Anschlag 23 anliegt (Fig. 3).

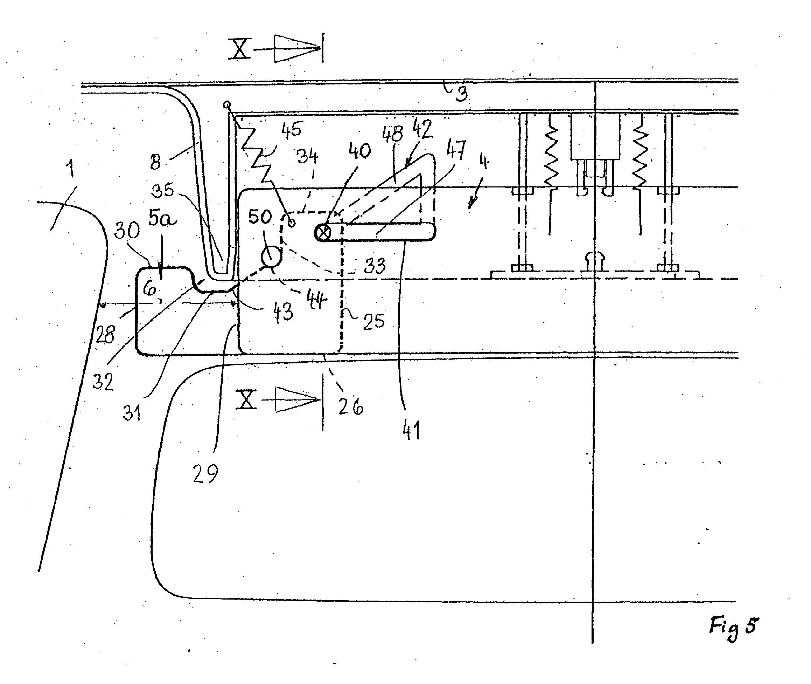

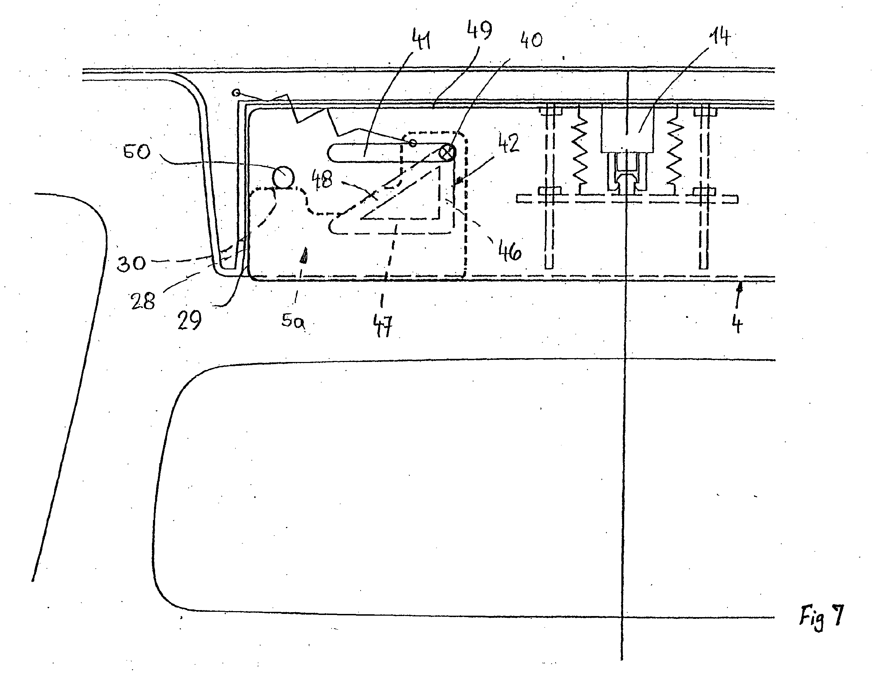

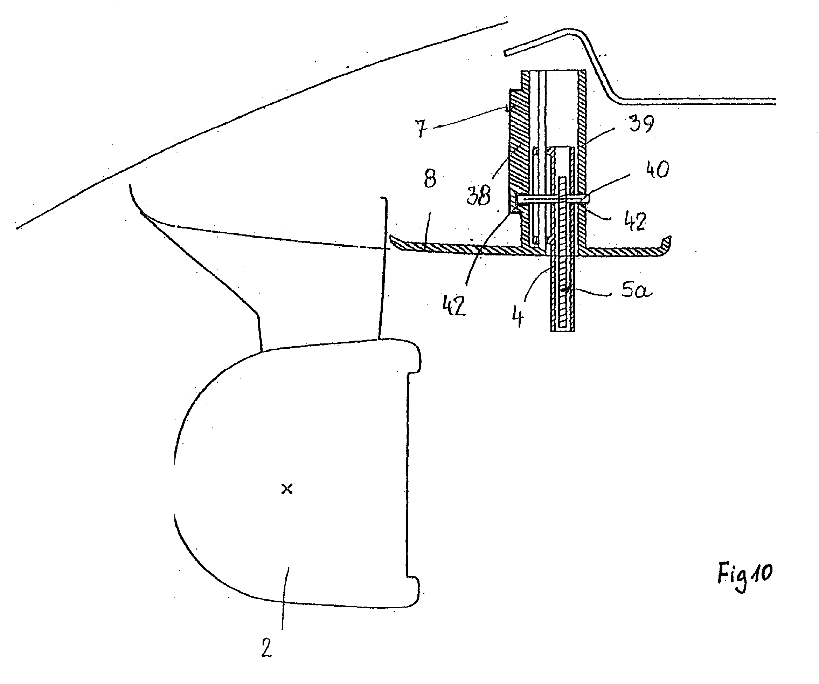

Bei der Ausführungsform nach den Fig. 5 bis 10 wird das Blendenteil 5a beim Verstellen der Sonnenblende 4 zwangläufig aus der in Fig. 7 dargestellten Ruhelage in die in Fig. 5 dargestellte Gebrauchslage verschoben. Das Blendenteil 5a hat einen Führungsbolzen 40, der das Blendenteil 5a durchsetzt (Fig. 10). Die Sonnenblende 4 ist wiederum in der Aufnahme 7 verschiebbar, die vorteilhaft einstückig mit dem Fahrzeughimmel 8 ausgebildet ist. Die Sonnenblende 4 ist mit einer parallel zu ihrer Längsrichtung sich erstreckenden Führung 41 versehen, die vom Führungsbolzen 40 durchsetzt wird. In den Seitenwänden 38, 39 der Aufnahme 7 ist jeweils eine dreieckförmige Führung 42 vorgesehen, von denen die Führung 42 in der Seitenwand 38 eine Vertiefung und die Führung 42 in der Seitenwand 39 eine Durchbrechung der jeweiligen Seitenwand ist (Fig. 10). Die Seitenwand 38 der Aufnahme 7 ist dementsprechend verdickt ausgebildet. Auch die gegenüberliegende Seitenwand 39 der Aufnahme 7 kann verdickt ausgebildet sein, so daß die Führung 42 in der Seitenwand 39 ebenfalls als Vertiefung ausgebildet sein kann. Es ist aber auch möglich, beide Führungen 42 als Durchbrüche in den Seitenwänden 38, 39 der Aufnahme 7 vorzusehen.

Das Blendenteil 5a ist im wesentlichen gleich ausgebildet wie das Blendenteil 5 gemäß den Fig. 1 bis 4. Es liegt mit Spiel innerhalb der als Hohlkörper ausgebildeten Sonnenblende 4 (Fig. 10). Im Unterschied zur vorigen Ausführungsform geht der Boden 31 der Vertiefung 32 des Blendenteils 5a stumpfwinklig in einen schrägen Rand 43 über (Fig. 5), der über eine kurze Anlagefläche 44 in den senkrecht an ihn anschließenden Rand 33 übergeht. Er liegt parallel zum Rand 25, der über die gerade verlaufende Stirnseite 34 mit dem Rand 33 verbunden ist. Der Rand 25 schließt senkrecht an den Rand 26 an, der parallel zur Stirnseite 34 verläuft und rechtwinklig an den Rand 28 anschließt. Er seinerseits schließt an den Rand 30 an.

Am Übergangsbereich zwischen den Rändern 33 und 34 des Blendenteils 5a ist das eine Ende einer Zugfeder 45 befestigt, deren anderes Ende am Fahrzeughimmel 8 bzw. am Fahrzeugdach 3 befestigt ist.

Die Führung 42 hat einen in Verschieberichtung der Sonnenblende 4 liegenden Führungsabschnitt 46 (Fig. 7), der am unteren Ende rechtwinklig in einen in Richtung auf die Schmalseite 29 der Sonnenblende 4 sich erstreckenden Führungsabschnitt 47 übergeht. Er ist länger als der Führungsabschnitt 46. Der Führungsabschnitt 47 geht an seinem der Schmalseite 29 der Sonnenblende 4 zugewandten Ende spitzwinklig in einen geraden Führungsabschnitt 48 über, der sich bis zum oberen Ende des Führungsabschnittes 46 erstreckt. Die Länge des horizontalen Führungsabschnittes 47 entspricht der Länge der Führung 41 in der Sonnenblende 4.

Die Sonnenblende 4 ist in der Ruhestellung (Fig. 7) versenkt in der Aufnahme 7 untergebracht und durch den Ein/Ausraster 14 gehalten. Die horizontale Führung 41 in der Sonnenblende 4, die mit geringem Abstand unterhalb der oberen Längsseite 49 der Sonnenblende 4 vorgesehen ist, liegt in Höhe des oberen Endes des Führungsabschnittes 46 der Führung 42. Das Blendenteil 5a liegt versenkt in der Sonnenblende 4 und liegt mit ihrem Rand 30 an einem Anschlag 50 unter der Kraft der Zugfeder 45 an, der in der Sonnenblende angeordnet und vorteilhaft als zylindrischer Zapfen ausgebildet ist. Der Rand 28 des Blendenteiles 5a liegt deckungsgleich mit der Schmalseite 29 der Sonnenblende 4. Der Führungsbolzen 40 liegt am rechten Ende der Führung 41 sowie am Rand des vertikalen Führungsabschnittes 46 an dessen oberem Ende an.

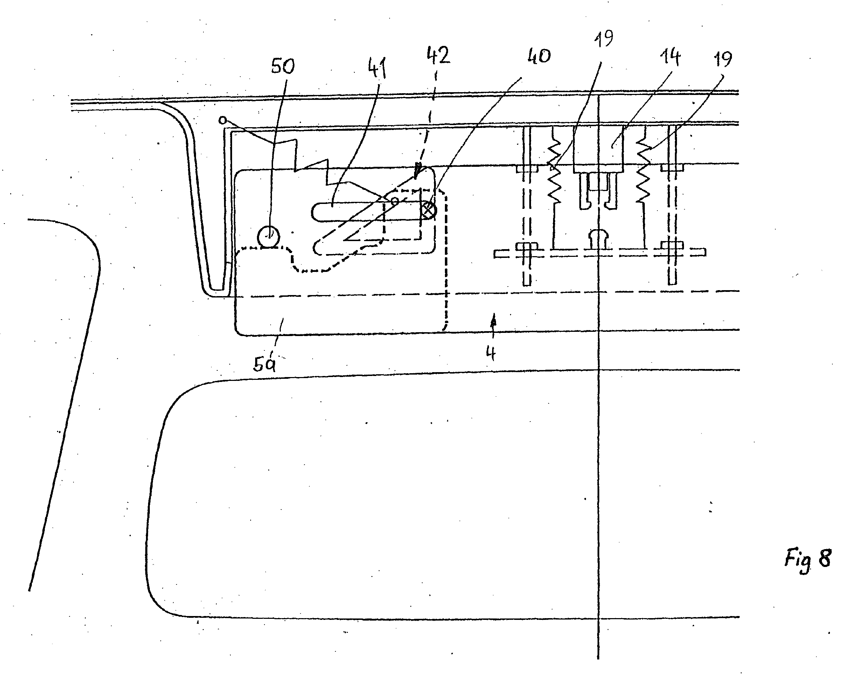

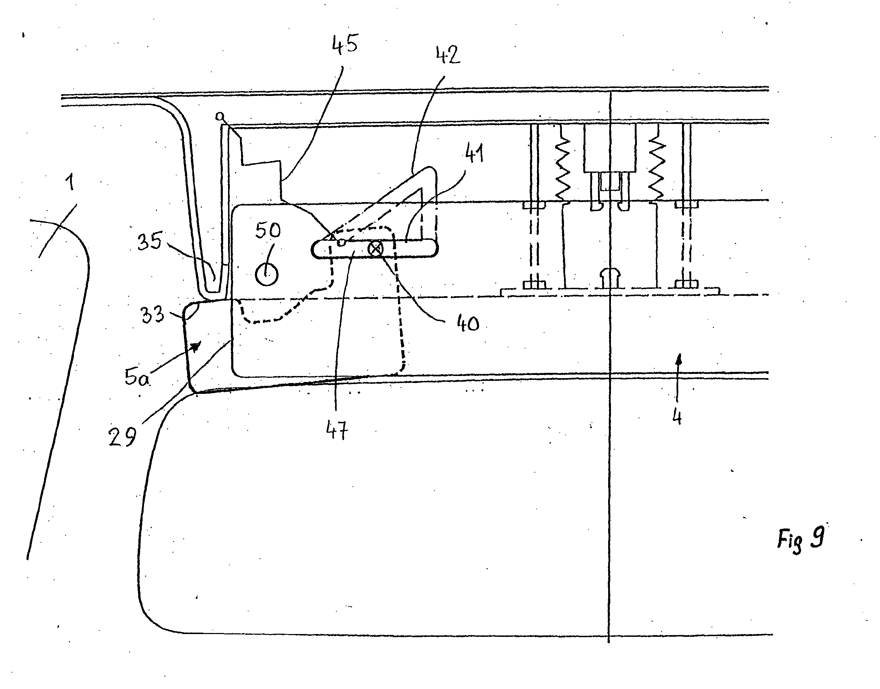

Um die Sonnenblende 4 auszufahren, wird sie zunächst geringfügig nach oben belastet, so daß der Ein/Ausraster 14 in der anhand der vorigen Ausführungsform beschriebenen Weise die Sonnenblende 4 freigibt. Sie wird dann unter der Kraft der beiden Druckfedern 19 nach unten geschoben. Hierbei wird auch die horizontale Führung 41 der Sonnenblende 4 nach unten bewegt. Der die Führung 41 durchsetzende Führungsbolzen 40 wird hierbei nach unten mitgenommen und gleitet im vertikalen Führungsabschnitt 46 der Führung 42 nach unten. Dies hat zur Folge, daß das Blendenteil 5a zunächst seine Lage bezüglich der Sonnenblende 4 beibehält (Fig. 8). Sobald die Sonnenblende 4 so weit nach unten aus der Aufnahme 7 geschoben ist, daß der Führungsbolzen 40 des Blendenteiles 5a in Höhe des unteren, horizontalen Führungsabschnittes 47 liegt (Fig. 9), wird das Blendenteil 5a unter der Kraft der Zugfeder 49 seitlich über die Schmalseite 29 aus der Sonnenblende 4 geschoben. Da die Führung 41 der Sonnenblende 4 und der Führungsabschnitt 47 der Führung 42 hierbei deckungsgleich liegen, bewegt sich der Führungsbolzen 40 in der Führung 41 und im Führungabschnitt 47 nach links in Richtung auf die Schmalseite 29 der Blende 4. Der Führungsbolzen 40 hat vorteilhaft kreisförmigen Querschnitt, so daß er leichtgängig verschoben werden kann. Der Durchmesser des Führungsbolzens 40 entspricht der Breite der Führung 41 bzw. der Breite der Führungsabschnitte 46 bis 48. Das Blendenteil 5a wird in der Führung 41 sowie im Führungsabschnitt 47 durch die Zugfeder 45 verschoben.

Solange der Führungsbolzen 40 noch im vertikalen Führungsabschnitt 46 liegt, stützt sich das Blendenteil 5a mit seinem Rand 30 am Anschlag 50 der Sonnenblende 4 ab (Fig. 8). Sobald der Führungsbolzen 40 in Höhe des horizontalen Führungsabschnittes 47 liegt und die Sonnenblende 4 weiter nach unten aus der Aufnahme 7 verschoben wird, gelangt das Blendenteil 5a unter der Kraft der Zugfeder 45 zum Führungsteil 35. Dies hat zur Folge, daß das Blendenteil 5a durch den Führungsteil 35a um die Achse des Führungsbolzens 40 entgegen dem Uhrzeigersinn geringfügig nach unten geschwenkt wird. Durch die Zugfeder 45 gelangt dadurch der Rand 33 des Blendenteils 5a zur Anlage am Führungsteil 35 (Fig. 9), wodurch das Blendenteil 5a vom Anschlag 50 der Sonnenblende 4 freikommt. Das Blendenteil 5a kann dann mit der Zugfeder 45 weiter nach außen in Richtung auf die fahrerseitige Sonnenblende 1 in die in Fig. 5 dargestellte Gebrauchslage verschoben werden. Sie wird dadurch bestimmt, daß das Blendenteil 5a mit der Anlagefläche 44 am Anschlag 50 der Sonnenblende 4 unter der Kraft der Zugfeder 45 anliegt (Fig. 5). In dieser Gebrauchslage liegt das Blendenteil 5a mit Abstand zum Führungsteil 35, der mit Spiel in die Vertiefung 32 des Blendenteiles 5a ragt. Der Führungsbolzen 40 liegt in der Gebrauchslage des Blendenteiles 5a außerdem an dem in Fig. 5 rechten Ende der Führung 41 und des Führungsabschnittes 47 der Führung 42 an. Somit ist das Blendenteil 5a durch den Anschlag 50 und den Führungsbolzen 40 einwandfrei gesichert. Das Blendenteil 5a steht unterhalb des Führungsteils 35 des Fahrzeughimmels 8 über die Schmalseite 29 der Sonnenblende 4 in Richtung auf die fahrerseitige Sonnenblende 1 vor und deckt weitgehend den Bereich 6 zwischen den beiden Sonnenblenden 1, 4 ab.

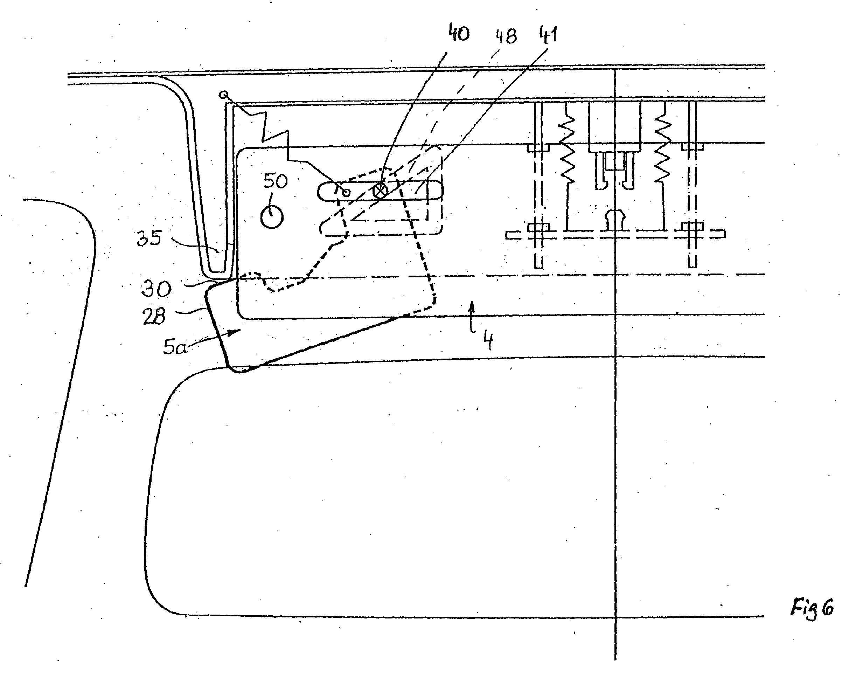

Wird die Sonnenblende 4 aus der Gebrauchslage gemäß Fig. 5 in die Aufnahme 7 zurückgeschoben, gelangt der Führungsbolzen 40 zwangweise in den schräg aufwärts verlaufenden Führungsabschnitt 48 der Führung 42 (Fig. 6). Beim Hochschieben der Sonnenblende 4 wird somit der Führungsbolzen 40 in der blendenseitigen Führung 41 in Fig. 6 nach rechts und gleichzeitig im schrägen Führungsabschnitt 48 schräg aufwärts verschoben. Das Blendenteil 5a kommt hierbei vom blendenseitigen Anschlag 50 frei. Außerdem wird das Blendenteil 5a im Zusammenwirken mit dem Führungsteil 35 entgegen dem Uhrzeigersinn geschwenkt, wobei das Blendenteil 5a mit seinem Rand 30 am Führungsteil 35 zur Anlage kommt. Beim weiteren Hochschieben der Sonnenblende 4 gleitet das Blendenteil 5a mit seinem Rand 28 längs des Führungsteiles 35 so weit, bis das Blendenteil 5a mit seinem Rand 30 am Anschlag 50 zur Anlage kommt (Fig. 7). In dieser Lage ist das Blendenteil 5a über den Anschlag 50 und den Führungsbolzen 40 einwandfrei lagegesichert.

Die Sonnenblende 4 mit dem Blendenteil 5, 5a befindet sich, in Fahrtrichtung des Fahrzeuges gesehen, vorteilhaft vor dem Innenrückblickspiegel 2 (Fig. 10), so daß die Sonnenblende 4 einfach vom Fahrer in die Ruhelage oder in die Gebrauchslage verschoben werden kann. Er muß lediglich die Sonnenblende 4 verschieben, da das Blendenteil 5, 5a zwangläufig in die Ruhelage bzw. in die Gebrauchslage verstellt wird. Mit dem Blendenteil 5, 5a wird der Bereich 6 zwischen der mittleren Sonnenblende 4 und der fahrerseitigen Sonnenblende 1 weitgehend abgedeckt, so daß kein Sonnenlicht durch diesen Bereich den Fahrer blenden kann. Die Sonnenblende 4 selbst kann durch den Verschiebevorgang einfach in die jeweilige Stellung verschoben werden. Das Blendenteil 5, 5a ist in der Ruhelage geschützt in der Sonnenblende 4 untergebracht. Es ist selbstverständlich möglich, die Sonnenblende 4 nicht als Hohlkörper auszubilden. Auch wenn die Sonnenblende 4 lediglich eine einfache Blende ist, kann das Blendenteil 5, 5a an der vom Fahrer abgewandten Rückseite der Sonnenblende 4 in der beschriebenen Weise angeordnet und geführt werden.

## Patentansprüche

1. Sonnenblende für Fahrzeuge, vorzugsweise für Kraftfahrzeuge, die aus einer Ruhelage in eine Gebrauchslage verstellbar und an wenigstens einem fahrzeugseitigen Träger gehalten ist,
**dadurch gekennzeichnet, daß** an der Sonnenblende (4) wenigstens ein Blendenteil (5, 5a) vorgesehen ist, das aus einer Ruhelage in eine Gebrauchslage verstellbar ist.

2. Sonnenblende nach Anspruch 1,
**dadurch gekennzeichnet, daß** das Blendenteil (5, 5a) zwangweise aus der Ruhelage in die Gebrauchslage verstellbar ist.

3. Sonnenblende nach Anspruch 1 oder 2,
**dadurch gekennzeichnet, daß** das Blendenteil (5) schwenkbar an der Sonnenblende (4) gelagert ist.

4. Sonnenblende nach einem der Ansprüche 1 bis 3,
**dadurch gekennzeichnet, daß** das Blendenteil (5, 5a) in der Ruhelage an wenigstens einem Anschlag (23, 50) abgestützt ist.

5. Sonnenblende nach Anspruch 4,
**dadurch gekennzeichnet, daß** das Blendenteil (5, 5a) unter Federkraft am Anschlag (23) anliegt.

6. Sonnenblende nach einem der Ansprüche 1 bis 5,
**dadurch gekennzeichnet, daß** das Blendenteil (5, 5a) in der Ruhelage durch die Sonnenblende (4) zumindest teilweise verdeckt ist.

7. Sonnenblende nach einem der Ansprüche 1 bis 6,
**dadurch gekennzeichnet, daß** das Blendenteil (5, 5a) in der Gebrauchslage vorteilhaft unter Federkraft an wenigstens einem Anschlag (50) abgestützt ist.

8. Sonnenblende nach einem der Ansprüche 1 bis 7,
**dadurch gekennzeichnet, daß** das Blendenteil (5, 5a) in der Gebrauchslage über die Sonnenblende (4) vorsteht.

9. Sonnenblende nach einem der Ansprüche 1, 2 und 4 bis 8,
**dadurch gekennzeichnet, daß** das Blendenteil (5a) durch eine Zwangführung (40 bis 42) in die Ruhe- und Gebrauchslage verstellbar ist.

10. Sonnenblende, insbesondere nach einem der Ansprüche 1 bis 9,
**dadurch gekennzeichnet, daß** das Blendenteil (5, 5a) bei der Verstellung der Sonnenblende (4) zwangweise verstellt wird.

11. Sonnenblende nach einem der Ansprüche 1 bis 10,
**dadurch gekennzeichnet, daß** das Blendenteil (5, 5a) durch wenigstens eine Feder (21, 45) in Richtung auf seine Gebrauchslage belastet ist.

12. Sonnenblende nach einem der Ansprüche 1, 2 und 4 bis 11,
**dadurch gekennzeichnet, daß** das Blendenteil (5a) im wesentlichen translatorisch aus der Ruhe- in die Gebrauchslage verstellbar ist.

13. Sonnenblende nach einem der Ansprüche 9 bis 12,
**dadurch gekennzeichnet, daß** die Zwangführung (40 bis 42) eine an der Sonnenblende (4) vorgesehene Führung (41) für ein Kulissenteil (40) des Blendenteils (5a) aufweist.

14. Sonnenblende nach einem der Ansprüche 9 bis 13,
**dadurch gekennzeichnet, daß** die Zwangführung (40 bis 42) eine fahrzeugseitige Führung (42) aufweist, in die das Kulissenteil (40) des Blendenteils (5a) eingreift.

15. Sonnenblende nach Anspruch 14,
**dadurch gekennzeichnet, daß** die fahrzeugseitige Führung (42) drei Führungsabschnitte (46 bis 48) aufweist, die dreieckförmig zueinander angeordnet sind und ineinander übergehen, und daß vorteilhaft der eine Führungsabschnitt (47) horizontal und ein anderer Führungsabschnitt (46) vertikal verlaufen.

16. Sonnenblende nach einem der Ansprüche 13 bis 15,
**dadurch gekennzeichnet, daß** die blendenseitige Führung (41) eine die Sonnenblende (4) in deren Längsrichtung durchsetzende Öffnung ist.

17. Sonnenblende, insbesondere nach einem der Ansprüche 1 bis 16,
**dadurch gekennzeichnet, daß** die Sonnenblende (4) zur Verstellung in die Ruhe- bzw. in die Gebrauchslage in Höhenrichtung verschiebbar ist.

18. Sonnenblende nach einem der Ansprüche 1 bis 17,
**dadurch gekennzeichnet, daß** die vorteilhaft in der Ruhelage durch wenigstens einen Ein/Ausraster (14) gehaltene Sonnenblende (4) in der Ruhelage in einer Aufnahme (7) versenkt untergebracht ist.

19. Sonnenblende nach einem der Ansprüche 1 bis 18,
**dadurch gekennzeichnet, daß** das Blendenteil (5, 5a) in der Gebrauchslage über eine Schmalseite (29) der Sonnenblende (4) vorsteht.

20. Sonnenblende, insbesondere nach einem der Ansprüche 1 bis 19,
**dadurch gekennzeichnet, daß** die Sonnenblende (4) wenigstens eine Kammer zur Aufnahme des Blendenteils (5, 5a) aufweist.

21. Sonnenblende nach Anspruch 20,
**dadurch gekennzeichnet, daß** die Sonnenblende (4) als Hohlkörper ausgebildet ist.

22. Sonnenblende nach einem der Ansprüche 1 bis 21,
**dadurch gekennzeichnet, daß** die Sonnenblende (4) im Bereich zwischen einer fahrerseitigen und einer beifahrerseitigen Sonnenblende (1) angeordnet ist.

23. Sonnenblende nach Anspruch 22,
**dadurch gekennzeichnet, daß** das Blendenteil (5, 5a) in der Gebrauchslage den Bereich (6) zwischen der fahrerseitigen und/oder beifahrerseitigen Sonnenblende (1) und der mittleren Sonnenblende (4) zumindest teilweise abdeckt.
